Europäisches Patentamt

European Patent Office

Office européen des brevets

(19)

(11) Publication number: 0 423 866 A1

# EUROPEAN PATENT APPLICATION

(12)

(21) Application number: 90202644.2

(22) Date of filing: 04.10.90

(51) Int. Cl.5: C07F 9/58

(30) Priority: 20.10.89 GB 8923683

(43) Date of publication of application:
24.04.91 Bulletin 91/17

(84) Designated Contracting States:
BE CH DE ES FR GB IT LI NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Budzelaar, Petrus Henricus Maria
Badhuisweg 3
NL-1031 CM Amsterdam(NL)

(74) Representative: Aalbers, Onno et al
P.O. Box 302
NL-2501 CH The Hague(NL)

(54) Phosphorous compounds.

(57) A process for the preparation of a phosphide of
the chemical structure RPPyLi wherein
R is alkyl, substituted or unsubstituted aryl, 2- or 4-
pyridyl,
P is phosphorous,
Py is 2- or 4-pyridyl and Li is lithium, wherein
a) in the preparation of a compound $CH_3PPyLi$:
either methyl di-2-, or 4-pyridylphosphine $CH_3P$-$(Py)_2$ is reacted with LiH, $Li(CH_3)$, LiAr, wherein
Ar is substituted or unsubstituted aryl, or 2-pyridyl
lithium or 4-pyridyllithium, or tri-2- or 4-pyridyl-
phosphine $P(Py)_3$ is reacted with $Li(CH_3)$;
b) in the preparation of a compound RPPyLi
wherein R is an alkyl higher than methyl: methyl
di-2- or 4-pyridylphosphine $CH_3P(Py)_2$ or ArP-
$(Py)_2$ wherein Ar is substituted or unsubstituted
aryl or tri-2- or 4-pyridylphosphine is reacted with
an alkyl lithium compound wherein alkyl is higher
than methyl;
c) in the preparation of a compound RPPyLi
wherein R is substituted or unsubstituted aryl:
either $ArP(Py)_2$ wherein Ar is substituted or unsubstituted aryl and Py is 2- or 4-pyridyl is reacted with LiH, 2-pyridyl lithium or 4-pyridyl lithium,
their alkyl-substituted derivatives or LiAr wherein
Ar is a substituted or unsubstituted aryl group
or tri-2- or 4-pyridylphosphine or $ArP(Py)_2$
wherein Ar is substituted or unsubstituted aryl is
reacted with LiAr wherein Ar is substituted or unsubstituted aryl;
d) in the preparation of a compound RPPyLi
wherein R is 2- or 4-pyridyl: tri-2 or 4-pyridyl
phosphine is reacted with LiH or 2- or 4-pyridyl
lithium.

# PHOSPHOROUS COMPOUNDS

The invention relates to a process for the preparation of a phosphide and to processes for the preparation of phosphines from the phosphide and to phosphides and phosphines as novel compounds.

It is generally known that phosphines with different substituents derived from phosphine $PH_3$ are rather difficult to prepare. The same applies to phosphines containing a pyridyl group.

It is an object of the invention to prepare phosphides as intermediate compounds, which can be used in the preparation of phosphines. Certain pyridyl phosphines find application as ligands in catalysts for the synthesis of methylmethacrylate.

The invention relates to a process for the preparation of a phosphide of the chemical structure RPPyLi wherein

R is alkyl, substituted or unsubstituted aryl, 2- or 4-pyridyl,

P is phosphorous,

Py is 2- or 4-pyridyl and Li is lithium, wherein

a) in the preparation of a compound $CH_3PPyLi$: either methyl di-2-, or 4-pyridylphosphine $CH_3P$-$(Py)_2$ is reacted with LiH, $Li(CH_3)$, LiAr, wherein Ar is substituted or unsubstituted aryl, or 2-pyridyl lithium or 4-pyridyl lithium, or tri-2- or 4-pyridylphosphine $P(Py)_3$ is reacted with $Li(CH_3)$;

b) in the preparation of a compound RPPyLi wherein R is an alkyl higher than methyl: methyl di-2- or 4-pyridylphosphine $CH_3P(Py)_2$ or ArP-$(Py)_2$ wherein Ar is substituted or unsubstituted aryl or tri-2- or 4-pyridylphosphine is reacted with an alkyl lithium compound wherein alkyl is higher than methyl;

c) in the preparation of a compound RPPyLi wherein R is substituted or unsubstituted aryl: either $ArP(Py)_2$ wherein Ar is substituted or unsubstituted aryl and Py is 2- or 4-pyridyl is reacted with LiH, 2-pyridyl lithium or 4-pyridyl lithium, their alkyl-substituted derivatives or LiAr wherein Ar is a substituted or unsubstituted aryl group or tri-2- or 4-pyridylphosphine or $ArP(Py)_2$ wherein Ar is substituted or unsubstituted aryl is reacted with LiAr wherein Ar is substituted or unsubstituted aryl;

d) in the preparation of a compound RPPyLi wherein R is 2- or 4-pyridyl: tri-2- or 4-pyridyl phosphine is reacted with LiH or 2- or 4-pyridyl lithium.

The phosphides of the chemical structure RPPyLi, as defined above, are prepared by reaction of a lithium compound with a pyridylphosphine with at least two pyridyl groups. Depending on the groups bound to the Li-atom and the groups bound to the -PPyLi moiety, the phosphide RPPyLi has taken up the R from either the lithium compound or has kept it from the phosphine, in accordance with the reactions under a), b), c) and d) above.

Generally the reaction between the lithium compound and the pyridylphosphine is fast (within a few minutes) and quantitative. Ar is preferably a phenyl group or a substituted phenyl group, such as 4-methoxyphenyl or 4-dimethylaminophenyl.

The lithium compound is preferably lithiumhydride, methyl lithium, tert.butyllithium, phenyl lithium, p-tolyl lithium or 6-methyl-2-pyridyllithium.

The reaction is preferably performed in the presence of a solvent. Preferred solvents are tetrahydrofuran, hexane, diethylether or toluene. The reaction temperature may be between -100 °C and 100 °C, preferably between -80 °C and 20 °C.

In the preparation of the phosphide RPPyLi wherein R, Py, P and Li have the above-mentioned meanings, the starting phosphine must contain at least two 2- or 4-pyridyl groups. Starting compounds having one such pyridyl group or a 3-pyridyl group do not react in the desired manner with lithium compounds and give 1,4-dihydropyridyl or 1,2-dihydropyridyl derivatives by addition to the pyridyne ring. Pyrimidinyl group containing phosphines react in the same way.

The invention also relates to a process for the preparation of a phosphine of the chemical structure RPPyH, wherein

R is alkyl, substituted or unsubstituted aryl, 2- or 4-pyridyl,

P is phosphorous,

Py is 2- or 4-pyridyl and

Li is lithium,

in which process the phosphide of the structure RPPyLi, wherein R, P and Py have the above meanings is reacted with a proton-donating agent, such as with water; and to the obtained phosphines as novel compounds.

The invention further relates to a process for the preparation of a phosphine of the chemical structure

$RR^1PyP$, wherein

P is phosphorous,

Py is 2- or 4-pyridyl,

R is alkyl, substituted or unsubstituted aryl, 2- or 4-pyridyl, and

$R^1$ is substituted or unsubstituted alkyl or aryl,

by reacting a phosphide of the chemical structure RPPyLi, wherein R, P and Py have the above meanings, is reacted with a halogenide of the formula $R^1Hal$, wherein $R^1$ is substituted or unsubstituted alkyl or aryl and Hal represents chlorine or bromine.

The compounds of the chemical structures RPPyLi and RPPyH, wherein
R is alkyl, substituted or unsubstituted aryl, 2- or 4-pyridyl,
P is phosphorous,
Py is 2- or 4-pyridyl,
Li is lithium and H is hydrogen,
are novel compounds. Specifically mentioned are those compounds wherein in both chemical structures R is methyl, n-butyl, tert.butyl, phenyl, p-tolyl, 4-methoxyphenyl, 4-dimethylaminophenyl or 6-methyl-2-pyridyl.

As already mentioned above the reaction product of RPPy Li and $R^1$Hal is a phosphine of the chemical formula $RR^1$PPy in which R and $R^1$ are groups which may be different. Consequently the process according to the invention has the possibility to prepare phosphines with 3 different organic groups. Phosphines with a 2- or 4-pyridyl group and two different other organic groups, wherein R is alkyl or substituted or unsubstituted aryl and $R^1$ is substituted or unsubstituted alkyl or aryl are also novel compounds.

Example 1 - Preparation of n-butyl 2-pyridyl lithium phosphide

All reactions were carried out under an atmosphere of argon. Solvents (tetrahydrofuran, diethylether) were distilled under argon from sodium/benzophenone prior to use. To a magnetically stirred solution of 2.5 g phenyl(2-pyridyl)-$_2$P in 20 ml tetrahydrofuran, cooled to -80 °C, was added in the course of 10 min 5.9 ml of a 1.6 M solution of n-butylLi in hexanes. The resulting deep-red solution was allowed to warm to room temperature, and analysis of the solution by $^{31}$P NMR showed it to contain the phosphide (n-butyl)-(2-pyridyl)PLi as the only phosphorous-containing compound ($\delta_p$ = -16.3 ppm). The phosphide was further characterized as the hydrolysis product, the secondary phosphine n-butyl 2-pyridylPH:

The solvents were removed in vacuo, and 25 ml of diethylether and 10 ml of water were added. After 10 min of stirring, the organic layer was separated and the water layer was extracted with 10 ml of ether. The organic layers were combined and the solvent was removed in vacuo (0.5 mm Hg). The resulting yellow liquid (2.82 g, 92% yield) was analyzed by $^1$H, $^{13}$C and $^{31}$P NMR and shown to consist of a 1:1 (molar ratio) mixture of 2-phenylpyridine and n-butyl 2-pyridylPH ($\delta_p$ = -50.6 ppm, $^1$J$_{PH}$ = 204 Hz).

Example 2 - Preparation of n-butyl 4-pyridyl lithium phosphide

The reaction was carried out as described in example 1, but using 2.51 g (4-pyridyl)$_3$P. The lithium phosphide was characterized by $^{31}$P NMR ($\delta_p$ = -19.4 ppm) and by hydrolysis to the secondary phosphine n-butyl 4-pyridylPH ($\delta_p$ = -53.4 ppm, $^1$H$_{PH}$ = 212 Hz) obtained as a 1:1 molar mixture with 4,4'-bipyridine.

Example 3 - Preparation of n-butyl 2-pyridyl lithium phosphide

The reaction was carried out as described in example 1, but using 2.51 g (2-pyridyl)$_3$P. The lithium phosphide was characterized by $^{31}$P NMR and by hydrolysis to the secondary phosphine n-butyl 2-pyridylPH, obtained as a 1:1 molar mixture with 2,2'-bipyridine.

Example 4 - Preparation of n-butyl 2-pyridyl lithium phosphide

The reaction was carried out as described in example 1, but using 2.78 g (4-methoxyphenyl)(2-pyridyl)$_2$P. The lithium phosphide was characterized by $^{31}$P NMR and by hydrolysis to the secondary phosphine (n-butyl)(2-pyridyl)PH, obtained as a 1:1 molar mixture with 2-(4-methoxyphenyl)-pyridine in 80% yield. The (4-methoxyphenyl)(2-pyridyl)$_2$P starting material was prepared as follows:

A solution of 10 g (4-methoxyphenyl)PCl$_2$ in 30 ml diethylether was added in the course of 10 min to a cooled (-40 °C), stirred solution of 2-pyridyl lithium, obtained from 15.1 g 2-bromopyridine and 60 ml n-butylLi in 200 ml diethylether. The solution was warmed to room temperature, the solvents were removed in vacuo, and 100 ml water and 250 ml dichloromethane were added. After stirring for 10 min, the organic layer was separated and concentrated in vacuo. From the residue, 5 g (36% yield) of (4-methoxyphenyl)(2-pyridyl)$_2$P could be obtained by crystallization from hexane/toluene (4:1).

Example 5 - Preparation of di(2-pyridyl)lithium phosphide

The reaction was carried out as described in example 1, but using 2.51 g (2-pyridyl)$_3$P NMR and a suspension of 0.10 g LiH in 10 ml hexane.

The reaction was also carried out at a temperature of 45 °C and the reaction time was 1 hour. The lithium phosphide was characterized by $^{31}$P ($\delta_p$

= 4 ppm, broad) and by hydrolysis to the secondary phosphine $(2\text{-pyridyl})_2\text{PH}$ ($\delta_p$ = -35.0, $^1J_{PH}$ 223 Hz); 80% yield.

Example 6 - Preparation of phenyl 2-pyridyl lithium phosphide

The reaction was carried out as described in example 5, but using 2.50 g phenyl$(2\text{-pyridyl})_2\text{P}$. The lithium phospide was characterized by $^{31}\text{P}$ NMR ($\delta_p$ = 5 ppm, broad) and by hydrolysis to the secondary phosphine phenyl 2-pyridylPH ($\delta_p$ = -38.4, $^1J_{PH}$ = 223 Hz) which was, however, contaminated with ca 15% $(2\text{-pyridyl})_2\text{PH}$.

Example 7 - Preparation of methyl and phenyl 2-pyridyl lithium phosphide

The reaction was carried out as described in example 1, but using a 1.6 M solution of methylLi in diethylether. Analysis of the crude reaction mixture by $^{31}\text{P}$ NMR showed the presence of the phosphides methyl 2-pyridylPLi and phenyl 2-pyridylPLi and the phosphine dimethyl 2-pyridylP in the approximate molar ratio 60:30:10. Hydrolysis and workup of the mixture afforded 1.7 g of a mixture of methyl 2-pyridylPH ($\delta_p$ = -68.9 ppm, $^1J_{PH}$ = 211 Hz), phenyl 2-pyridylPH, dimethyl 2-pyridylP ($\delta_p$ = -41.2 ppm) and 2-phenylpyridine (56:32:12:60 molar ratio).

Example 8 - Preparation of methyl and phenyl 2-pyridyl lithium phosphide

The reaction was carried out as described in example 7, except that the solvent used for the phenyl$(2\text{-pyridyl})_2\text{P}$ was toluene. The same products as in example 7 were obtained, but in a different ratio: the hydrolysis product contained methyl 2-pyridylPH, phenyl 2-pyridylPH, dimethyl 2-pyridylP and 2-phenylpyridine in the approximate ratio 36:52:11:40, as well as traces of dimethyl phenyl phosphine and methyl phenyl 2-pyridyl phosphine.

Example 9 - Preparation of 4-dimethylaminophenyl 2-pyridyl lithium phosphide and p-tolyl 2-pyridyl lithium phosphide

The reaction was carried out as described in example 1, but using 2.91 g (4-dimethylaminophenyl)$(2\text{-pyridyl})_2\text{P}$ and a solution of 0.36 g p-tolylLi in 5 ml tetrahydrofuran. Analysis of the reaction mixture by $^{31}\text{P}$ NMR showed the

formation of p-tolyl 2-pyridylPLi ($\delta_p$ = 6.5 ppm) and 4-dimethylaminophenyl 2-pyridylPLi ($\delta_p$ = 4.7 ppm) in the approximate ratio 7:3; hydrolysis gave a mixture of 4-dimethylaminophenyl 2-pyridylPH ($\delta_p$ = -41.6 ppm, $^1J_{PH}$ = 225 Hz), p-tolyl 2-pyridylPH ($\delta_p$ = -39.8 ppm, $^1J_{PH}$ = 223 Hz), 2-(4-dimethylaminophenyl)pyridine and 2-(p-tolyl)-pyridine (36:14:14:36). The 4-dimethylaminophenyl $(2\text{-pyridyl})_2\text{P}$ starting material was prepared as follows:

A solution of 10.6 g 4-dimethylaminophenylPCl$_2$ in 30 ml diethylether was added in the course of 10 min to a cooled (-40 °C, stirred solution of 2-pyridyl lithium, obtained from 15.1 g 2-bromopyridine and 60 ml n-butylLi in 200 ml diethylether. The solution was warmed to room temperature, the solvents were removed in vacuo, and 100 ml water and 250 ml dichloromethane were added. After stirring for 10 min, the organic layer was separated and concentrated in vacuo. From the residue, 7 g (48% yield) of 4-dimethylaminophenyl $(2\text{-pyridyl})_2\text{P}$ could be obtained by crystallization from hexane/toluene (8:1).

Example 10 - Preparation of phenyl 2-pyridyl lithium phosphide and phenyl(6-methyl-2-pyridyl)-lithium phosphide

The reaction was carried out as described in example 1, except that the solvent was toluene and that a cooled (-35 °C) solution of 0.94 g (6-methyl-2-pyridyl)Li in 15 ml toluene was used. Hydrolysis gave a mixture consisting of phenyl 2-pyridylPH, phenyl (6-methyl-2-pyridyl)PH ($\delta_p$ = -39.1, $^1J_{PH}$ = 223 Hz), 2,2$'$-bipyridine and 6-methyl-2,2$'$-bipyridine in the approximate ratio 40:10:30:20. The (6-methyl-2-pyridyl)Li starting material was prepared as follows:

36.3 ml of a 1.6 M solution of n-butylLi in hexanes was added to 60 ml of diethylether. To the cold (- 40 °C), stirred solution was added in the course of 30 min a solution of 10 g 2-bromo-6-methylpyridine in 25 ml diethylether. The solution was allowed to warm to -5 °C and then cooled again to 30 °C. Most of the solvent was removed in vacuo at -30 °C, and the residue was washed with three 50-ml portions of cold (-30 °C) hexane and dried in vacuo, leaving yellow, solid (6-methyl-2-pyridyl)Li (which must be stored below room temperature); it was characterized by $^1\text{H}$ and $^{13}\text{C}$ NMR and by hydrolysis to 2-methylpyridine.

Example 11 - Preparation of p-tolyl 2-pyridyl lithium phosphide and di-2-pyridyl lithium phosphide

The reaction was carried out as described in example 9, except that 2.51 g (2-pyridyl)₃P was used. After hydrolysis the reaction product showed the presence of p-tolyl 2-pyridylPH, (2-pyridyl)₂PH, p-tolyl(2-pyridyl)₂P, 2-(p-tolyl)-pyridine and 2,2'-bipyridine in the approximate ratio 70:30:60:30:70.

## Example 12 - Preparation of t-butyl 2-pyridyl lithium phosphide

The reaction was carried out as described in example 1, except that 5.6 ml of a 1.7 M solution of t-butylLi in n-pentane was used. $^{31}$P NMR analysis of the reaction mixture showed the presence of the phosphide t-butyl 2-pyridylPLi ($\delta_p$ = 38 ppm); hydrolysis afforded a 1:1 molar mixture of t-butyl 2-pyridylPH ($\delta_p$ = -5.4 ppm $^1J_{PH}$ = 212 Hz) and 2-phenylpyridine in 90% yield.

## Example 13 - Preparation of p-tolyl 2-pyridyl lithium phosphide and phenyl 2-pyridyl lithium phosphide

The reaction was carried out as described in example 9, but 2.50 g of phenyl(2-pyridyl)₂P was used. $^{31}$P NMR analysis of the reaction mixture showed the formation of phenyl 2-pyridylPLi and p-tolyl 2-pyridylPLi; hydrolysis afforded a mixture of p-tolyl 2-pyridylPH, phenyl 2-pyridylPH, 2-(p-tolyl)-pyridine and 2-phenylpyridine in the approximate ratio 27:23:23:27 and 90% yield.

## Example 14 - Preparation of methyl 2-pyridyl lithium phosphide and di(2-pyridyl)lithium phosphide

The reaction was carried out as described in example 7, but 2.51 g of (2-pyridyl)₃P was used. Analysis of the reaction mixture by $^{31}$P NMR showed the formation of methyl 2-pyridylPLi and (2-pyridyl)₂PLi as well as some dimethyl 2-pyridylP; hydrolysis afforded a mixture of methyl 2-pyridylPH, (2-pyridyl)₂PH, (methyl)₂ 2-pyridylP and 2,2'-bipyridine in the approximate ratio 30:10:10:50.

## Example 15 - Preparation of methyl 2-pyridyl lithium phospide

The reaction was carried out as described in example 7, but using 1.91 g of methyl (2-pyridyl)-₂P. Hydrolysis afforded a mixture of methyl 2-pyridylPH and dimethyl 2-pyridylP in the approximate ratio 1:1. The starting material methyl (2-pyridyl)₂P was prepared as follows:

A solution of 5.6 g methyl PCl₂ in 20 ml diethylether was added in the course of 10 min to a cooled (-40 °C), stirred solution of 2-pyridyl lithium, obtained from 15.1 g 2-bromopyridine and 60 ml n-butylLi in 200 ml diethylether. The solution was warmed to room temperature, the solvents were removed in vacuo, and 100 ml water and 250 ml dichloromethane were added. After stirring for 10 min, the organic layer was separated and concentrated in vacuo. From the residue, 6 g (62% yield) of methyl (2-pyridyl)₂P could be obtained by distillation.

## Example 16 - Preparation of methyl- and n-butyl 2-pyridyl lithium phosphide

The reaction was carried out as described in example 7, but 5.9 ml of a 1.6 M solution of n-butylLi was used. Hydrolysis afforded a mixture of n-butyl 2-pyridylPH, methyl 2-pyridylPH and methyl n-butyl 2-pyridylP in the approximate ratio 20:20:60.

## Example 17 - Preparation of di(n-butyl) 2-pyridyl phosphine

A solution of n-butyl 2-pyridylPLi was prepared as described in example 1. This solution was, however, not hydrolyzed. Instead, it was cooled to -40 °C and a solution of 1.3 g 1-bromobutane in 10 ml tetrahydrofuran was added. The mixture was again warmed to room temperature, the solvents were removed in vacuo, and 25 ml of diethylether and 10 ml of water were added. After 10 min of stirring, the organic layer was separated and the water layer was extracted with 10 ml of ether. The organic layers were combined and the solvent was removed in vacuo (66 Pa). The resulting light-yellow liquid was analyzed by $^1$H, $^{13}$C and $^{31}$P NMR and shown to consist of a 1:1 (molar ratio) mixture of 2-phenylpyridine and (n-butyl)₂(2-pyridyl)P ($\delta_p$ = -19.5 ppm).

## Example 18 - Preparation of n-butyl tert.butyl 2-pyridyl phosphine

The reaction was carried out as described in example 17, except that 5.6 ml of a 1.7 M solution of t-butylLi in pentane was used instead of the nbutylLi solution. The final product was identified as n-butyl t-butyl 2-pyridylP by NMR analysis ($\delta_p$ = 7.4 ppm).

## Example 19 - Preparation of dimethyl 2-pyridyl phosphine and methyl phenyl 2-pyridyl phosphine

The reaction was carried out as described in example 17, except that a 1.6 M solution of methylLi in diethylether was used instead of the n-butylLi solution, and 1.3 g iodomethane instead of the bromobutane. The reaction product was a mixture of (methyl)$_2$ 2-pyridylP, methyl phenyl 2-pyridylP and 2-phenyl pyridine in the approximate ratio 70:30:60, from which the (methyl)$_2$ 2-pyridylP was isolated by distillation.

## Example 20 - Preparation of dimethyl 2-pyridyl phosphine

The reaction was carried out as described in example 19, except that 1.91 g methyl(2-pyridyl)$_2$P and only 0.7 g iodomethane were used. Workup as described in example 17 afforded dimethyl 2-pyridyl phosphine, which was further purified by distillation (65% yield).

## Example 21 (Comparative) - Reaction of n-butylLi with (3-pyridyl)$_3$P

This reaction was carried out as described in example 3, but using (3-pyridyl)$_3$P instead of the (2-pyridyl)$_3$P. After hydrolysis, analysis of the product showed no secondary phosphine, demonstrating that no reaction to phosphide had occurred. The addition product 1,4-dihydro-4-butyl-3-bis(3-pyridyl)phosphino-pyridine ($\delta_p$ = -21.5 ppm), was found.

## Example 22 (Comparative) - Reaction of n-butylLi with (phenyl)$_2$((2-pyridyl) P

This reaction was carried out as described in example 3, but using 2.49 g (phenyl)$_2$(2-pyridyl)P. After hydrolysis, analysis of the product showed no secondary phosphine, demonstrating that no reaction to phosphide had occurred. The product of addition 1,4-dihydro-4-butyl-2-diphenyl-phosphinopyridine ($\delta_p$ = -7.5 ppm) was found.

## Example 23 (Comparative) - Reaction of n-butylLi with tert.butyl (2-pyridyl)$_2$P

This reaction was carried out as described in example 3, but using 2.31 g (t-butyl)(2-pyridyl)$_2$P. After hydrolysis, analysis of the product showed no secondary phosphine, demonstrating that no reaction to phosphide had occurred. The product of addition found was: 1,4-dihydro-4-butyl-2-(t-butyl)-(2-pyridyl)phosphino-pyridine ($\delta_p$ = 5.9 ppm).

## Example 24 (Comparative) - Reaction of n-butylLi with (phenyl)$_2$ 2-pyrimidylP

This reaction was carried out as described in example 3, but using 2.50 g diphenyl 2-pyrimidylP. After hydrolysis, analysis of the product showed no secondary phosphine, demonstrating that no reaction to phosphide had occurred. The products of addition 1,4-dihydro-4-butyl-2-diphenylphosphino-pyrimidine and 1,6-dihydro-6-butyl-2-diphenylphosphino-pyrimidine ($\delta_p$ = -6.6 and -7.2 ppm) were found.

## Claims

1. A process for the preparation of a phosphide of the chemical structure RPPyLi wherein
R is alkyl, substituted or unsubstituted aryl, 2- or 4-pyridyl,
P is phosphorous,
Py is 2- or 4-pyridyl and Li is lithium, wherein
   a) in the preparation of a compound CH$_3$PPyLi: either methyl di-2-, or 4-pyridylphosphine CH$_3$P-(Py)$_2$ is reacted with LiH, Li(CH$_3$), LiAr, wherein Ar is substituted or unsubstituted aryl, or 2-pyridyl lithium or 4-pyridyllithium, or tri-2- or 4-pyridylphosphine P(Py)$_3$ is reacted with Li(CH$_3$);
   b) in the preparation of a compound RPPyLi wherein R is an alkyl higher than methyl: methyl di-2- or 4-pyridylphosphine CH$_3$P-(Py)$_2$ or ArP-(Py)$_2$ wherein Ar is substituted or unsubstituted aryl or tri-2- or 4-pyridylphosphine is reacted with an alkyl lithium compound wherein alkyl is higher than methyl;
   c) in the preparation of a compound RPPyLi wherein R is substituted or unsubstituted aryl: either ArP(Py)$_2$ wherein Ar is substituted or unsubstituted aryl and Py is 2- or 4-pyridyl is reacted with LiH, 2-pyridyl lithium or 4-pyridyl lithium, their alkyl-substituted derivatives or LiAr wherein Ar is a substituted or unsubstituted aryl group or tri-2- or 4-pyridylphosphine or ArP(Py)$_2$ wherein Ar is substituted or unsubstituted aryl is reacted with LiAr wherein Ar is substituted or unsubstituted aryl;
   d) in the preparation of a compound RPPyLi wherein R is 2- or 4-pyridyl: tri-2- or 4-pyridyl phosphine is reacted with LiH or 2- or 4-pyridyl lithium.

2. A process as claimed in claim 1, wherein the group Ar is phenyl, 4-methoxyphenyl or 4-dimethylaminophenyl.

3. A process as claimed in claim 1 or 2, wherein the lithium compound is lithiumhydride, methyllithium, n-butyllithium, tert.butyllithium, phenyllithium, p-tolyllithium or 6-methyl-2-pyridyllithium.

4. A process as claimed in any one of the claims 1-3, wherein the reaction is performed in the presence of a solvent.

5. A process as claimed in claim 4, wherein the solvent is tetrahydrofuran, hexane, diethylether or toluene.

6. A process as claimed in any one of the claims 1-5, wherein the temperature is between -100 $^\circ$ C and 100 $^\circ$ C.

7. A process as claimed in claim 6, wherein the temperature is between -80 $^\circ$ C and 20 $^\circ$ C.

8. A process for the preparation of a phosphine of the chemical structure RPPyH, wherein
R is alkyl, substituted or unsubstituted aryl, 2- or 4-pyridyl,
P is phosphorous,
Py is 2- or 4-pyridyl and
Li is lithium,
which comprises reacting the corresponding phosphide RPPyLi with a proton donating agent.

9. A process for the preparation of a phosphine of the chemical structure $RR^1PyP$, wherein
P is phosphorous,
Py is 2- or 4-pyridyl,
R is alkyl, substituted or unsubstituted aryl, 2- or 4-pyridyl, and $R^1$ is substituted or unsubstituted alkyl or aryl, which comprises reacting a phosphide of the chemical structure RPPyLi, wherein R, Py and Li have the meanings as in the preamble, is reacted with a halogenide of the formula $R^1$Hal, wherein $R^1$ has the meanings as in the preamble and Hal represents chlorine or bromine.

10. As novel compounds phosphides of the chemical structure RPPyLi, wherein
R is alkyl, substituted or unsubstituted aryl, 2- or 4-pyridyl,
P is phosphorous,
Py is 2- or 4-pyridyl and
Li is lithium.

11. As novel compounds phosphides as claimed in claim 10, wherein R is methyl, n-butyl, tert.butyl, phenyl, 4-methoxyphenyl, p-tolyl, 4-dimethylaminophenyl, 2-pyridyl, 4-pyridyl or 6-methyl-2-pyridyl.

12. As novel compounds phosphines of the chemical structure RPPyH, wherein
R is alkyl, substituted or unsubstituted aryl, 2- or 4-pyridyl,
P is phosphorous,
Py is 2- or 4-pyridyl and
Li is lithium.

13. As novel compounds phosphines as claimed in claim 12, wherein R is methyl, n-butyl, tert.butyl, phenyl, 4-methoxyphenyl, p-tolyl, 4-dimethylaminophenyl, 2-pyridyl, 4-pyridyl or 6-methyl-2-pyridyl.

14. As novel compounds phosphines of the chemical structure
$RR^1PyP$, wherein
P is phosphorous,
Py is 2- or 4-pyridyl,
R is alkyl or substituted or unsubstituted aryl,
$R^1$ is substituted or unsubstituted alkyl or aryl, and
R is different from $R^1$.

15. As novel compounds phosphines as claimed in claim 14, wherein R and $R^1$ are different, and chosen from the group consisting of phenyl, 4-methoxyphenyl, 4-dimethylaminophenyl, methyl, n-butyl and tert.butyl.

European
Patent Office

# EUROPEAN SEARCH REPORT

Application Number

**EP 90 20 2644**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 271 144 (SHELL INTERNATIONALE RESEARCH MAATSCHAPPIJ B.V.) <br> * Pages 3-5 * | 1-15 | C 07 F <br> 9/58 |
| A | JOURNAL OF ORGANIC CHEMISTRY, vol. 43, no. 5, 3rd March 1978, pages 947-949, American Chemical Society; G.R. NEWKOME et al.: "Chemistry of hetercyclic compounds. 27. An improved preparation of pyridyldiphenylphosphines" <br> * Page 949 * | 1-15 | |
| P,X | EP-A-0 386 834 (SHELL INTERNATIONALE RESEARCH MAATSCHAPPIJ B.V.) <br> * Pages 8-12 * | 1-7,9-11, 14,15 | |
| P,X | CHEMISCHE BERICHTE, vol. 123, no. 5, May 1990, pages 989-993, VCH Verlagsgesellschaft mbH, Weinheim, DE; G.U. SPIEGEL et al.: "Synthese und Reaktionen von 2-Pyridylphosphan, 2-C5NH4-PH2" <br> * Page 991, compound 6; page 992 * | 12,13 | |
| P,X | HETEROCYCLES, vol. 30, no. 1, 1990, pages 347-351; Y. UCHIDA et al.: "Reaction of triheteroarylphosphines with organolithium reagents concurrent ligand exchange and ligand coupling" <br> * Page 350; scheme I * | 1-7,10,11 | **TECHNICAL FIELDS SEARCHED (Int. Cl.5)** <br><br> C 07 F 9/00 |

The present search report has been drawn up for all claims

| Place of search | Date of completion of search | Examiner |
|---|---|---|
| The Hague | 30 January 91 | BESLIER L.M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document